# EUROPEAN PATENT SPECIFICATION

(11) **EP 2 060 214 B1**
(45) Date of publication and mention of the grant of the patent: **21.03.2012**
(21) Application number: 08160989.3
(22) Date of filing: 23.07.2008
(51) Int. Cl.: A47J 37/07

(54) **Gas Oven with Digital Audio Power Amplifier Device**
Gasofen mit digitaler Audioleistungsverstärkungsvorrichtung
Four à gaz avec dispositif d'amplificateur de puissance audio numérique

(30) Priority: 13.11.2007 CN 200720059553 U
(43) Date of publication of application: 20.05.2009
(73) Proprietor: Guangdong Vanward New Electric Co., Ltd, Guangdong 528305 (CN)
(72) Inventor: Ye, Yuanzhang c/o Guangdong Vanward Group Co., Ltd., Foshan City Guangdong 529305 (CN); Zeng, Zhiming c/o Guangdong Vanward Group Co., Ltd., Foshan City Guangdong 529305 (CN); Yang, Jun c/o Guangdong Vanward Group Co., Ltd., Foshan City Guangdong 529305 (CN)
(74) Representative: Betten & Resch

(56) References cited:
- WO-A-2006/014511
- DE-A1- 10 224 364

## Description

### TECHNICAL FIELD

The present invention relates to a gas oven, in particular to a gas oven with a digital audio power amplifier device.

### BACKGROUND OF THE INVENTION

Normally, a known oven only has a single function of grilling. Therefore, if users would like to listen to music jointly with others while grilling outdoors, they have to bring professional audio equipments which are inconvenient to carry.

A gas oven according to the preambel of claim 1 is known from document WO 2006/014511 A. According to this document an entire CD player is integrated in the gas oven. The high temperature inside the oven may therefore affect the operation of the CD player.

As further prior art, reference is made to DE 10224364 A1.

### SUMMARY OF THE INVENTION

Having outlined the state of the prior art and its attendant shortages, it is an objective of the present invention to provide a cas oven with a digital audio power amplifier device, which can play music effectively while being used for grilling and does not affect the operation of grilling.

The above object of the present invention is achieved by a gas oven according to claim 1. An advantageous embodiment is defined in claim 2.

Preferably, the digital audio power amplifier device assembled in the base having a tapered outer surface is of a tapered outer surface matching with the tapered outer surface of the base.

The digital audio power amplifier device comprises: an electrical component box, a rear cover for fixing on the electrical component box to form a closed echo space, a printed circuit board for power amplifier assembled inside the electrical component box, an adjustable audio resistor partially exposed out of the electrical component box, a LED indicator light assembled below the adjustable audio resistor and partially exposed out of the electrical component box, two loudspeakers assembled respectively on the right and left sides of the electrical component box, an audio inlet provided at the lower portion of the electrical component box, a DC jack provided on an outer portion of the electrical component box.

### The advantages of the present invention

For the digital audio power amplifier device being assembled inside the base, it can play music simultaneously while grilling; little space is occupied; it does not affect the grilling operation of user and is convenient for carrying.

### BRIEF DESCRIPTION OF THE DRAWING

The structural and operational characteristics of the present invention and its advantages as compared to the known state of the prior art will be better understood from the following description, relating to the attached drawings which show illustratively but not restrictively examples of the present invention. In the drawings:
Fig. 1 is a schematic perspective view showing a gas oven according to an embodiment of the present invention;
Fig. 2 is a schematic structural view showing a digital audio power amplifier device according to an embodiment of the present invention;
Fig. 3 is a schematic structural view showing the connection between the digital audio power amplifier device and the base

### DETAILED DESCRIPTION OF THE INVENTION

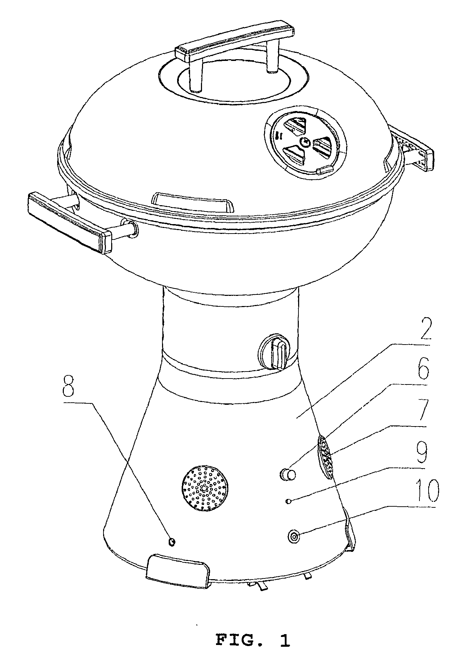

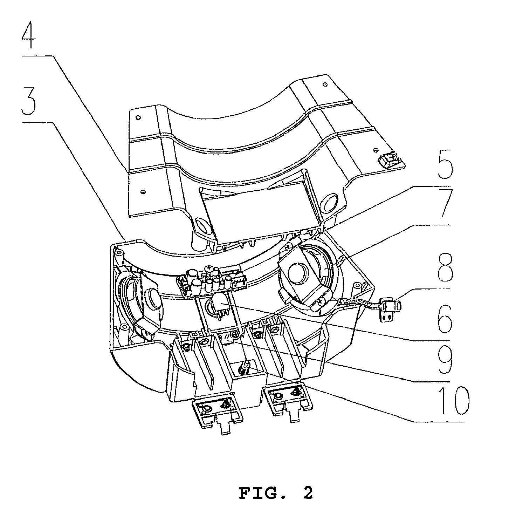

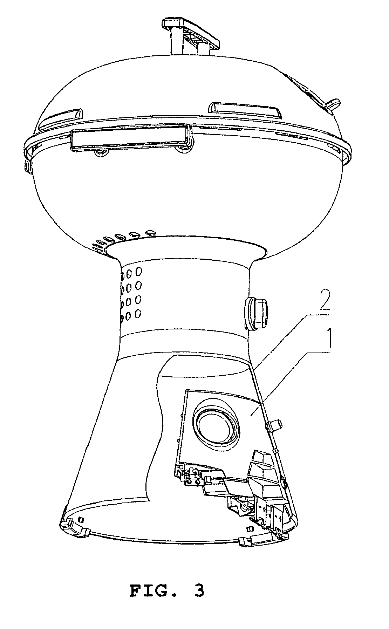

Referring to Figs. 1, 2, and 3, a gas oven comprises a base 2 and a digital audio power amplifier device 1. The digital audio power amplifier device 1 is assembled inside the base 2. The digital audio power amplifier device1 comprises an electrical component box 3, a rear cover 4 for fixing on the electrical component box 3 to form a closed echo space, a printed circuit board for power amplifier 5, an adjustable audio resistor 6, two loudspeakers 7, a DC jack 8, a LED indicator light 9, and an audio inlet 10. The printed circuit board for power amplifier 5 is fixed to the inner top of the electrical component box 3 by screw. The adjustable audio resistor 6 is partially exposed out of the electrical component box 3 after assembly. The LED indicator light 9 is assembled below the adjustable audio resistor 6 and partially exposed out of the electrical component box 3. Two loudspeakers 7 are provided respectively on the left side and the right side of the electrical component box 3 and fixed by brackets. The audio inlet 10 is provided at a lower central portion of the electrical component box 3. The DC jack 8 is connected with wires from the electrical component box 3 and fixed on a bracket outside the electrical component box 3. The rear cover 4 is fixed on the electrical component box 3 by screw to form a closed echo space.

The digital audio power amplifier 1 is fixed on a bracket by screw and then assembled at the lower inner portion of the base 2. The adjustable audio resistor 6, the LED indicator light 9 and the audio inlet 10 are assembled in the mounting holes on the base 2 and extend outwards. The adjustable audio resistor 6 is fixed on the gas oven by a hexagon nut at the outer portion, so that the digital audio power amplifier 1 is firmly attached to the inner surface of the base 2, and no outside space of the gas oven is occupied. The digital audio power amplifier 1 can be operated separately with respect to the grilling operation. The power supply may be provided by four 1.5V AA batteries assembled inside the electrical component box 3 or by connecting the DC jack 8 with a DC switching power supply of 6 V. When in use, the audio inlet 10 is connected with a MP3, MP4, and the like. Then, turn on the audio resistor 6, the LED indicator light 9 is on, and users can listen to the music accordingly. With the present invention, users are unnecessary to carry additional audio equipments in order to enjoy music while grilling.

## Claims

1. A gas oven, comprising a base (2), **characterized in that** the gas oven further comprises a digital audio power amplifier device (1) assembled in the base (2), wherein the digital audio power amplifier device (1) comprises: an electrical component box (3), a rear cover (4) for fixing on the electrical component box (3) to form a closed echo space, a printed circuit board for power amplifier (5) assembled inside the electrical component box (3), an adjustable audio resistor (6) partially exposed out of the electrical component box (3), a LED indicator light (9) assembled below the adjustable audio resistor (6) and partially exposed out of the electrical component box (3), two loudspeakers (7) assembled respectively on the right and left sides of the electrical component box (3), an audio inlet (10) provided at the lower portion of the electrical component box (3), a DC jack (8) provided on an outer portion of the electrical component box (3); wherein the digital audio power amplifier (1) is fixed on a bracket by screw and then assembled at the lower inner portion of the base (2); the adjustable audio resistor (6), the LED indicator light (9) and the audio inlet (10) are assembled in mounting holes on the base (2) and extend outwards.

2. The gas oven of claim 1, wherein the digital audio power amplifier device (1) assembled in the base (2) having a tapered outer surface is of a tapered outer surface matching with the tapered outer surface of the base(2).

## Patentansprüche

1. Gasofen, umfassend eine Basis (2), **dadurch gekennzeichnet, dass** der Gasofen ferner eine digitale Audioleistungsverstärkervorrichtung (1) umfasst, die in der Basis (2) angeordnet ist, wobei die digitale Audioleistungsverstärkervorrichtung (1) umfasst: eine elektrische Komponentenbox (3), eine hintere Abdeckung (4) zur Befestigung an der elektrischen Komponentenbox (3), um einen geschlossenen Schallraum zu bilden, eine gedruckte Leiterplatte für einen Leistungsverstärker (5), die innerhalb der elektrischen Komponentenbox (3) angeordnet ist, einen einstellbaren Audiowiderstand (6), der teilweise aus der elektrischen Komponentenbox (3) heraus freiliegt, ein LED-Anzeigelicht (9), das unter dem einstellbaren Audiowiderstand (6) angeordnet ist und teilweise aus der elektrischen Komponentenbox (3) heraus freiliegt, zwei Lautsprecher (7), die an der rechten bzw. der linken Seite der elektrischen Komponentenbox (3) angeordnet sind, einen Audioeinlass (10), der am unteren Bereich der elektrischen Komponentenbox (3) vorgesehen ist, eine Gleichspannungsbuchse (8), die an einem Außenbereich der elektrischen Komponentenbox (3) vorgesehen ist; wobei der digitale Audioleistungsverstärker (1) durch Verschrauben an einer Klammer befestigt und dann am unteren inneren Bereich der Basis (2) angeordnet ist, wobei der einstellbare Audiowiderstand (6), das LED-Anzeigelicht (9) und der Audioeinlass (10) in Montagelöchern an der Basis (2) angeordnet sind und sich nach außen erstrecken.

2. Gasofen nach Anspruch 1, wobei die digitale Audioleistungsverstärkervorrichtung (1), die in der Basis (2) mit einer sich verjüngenden Außenoberfläche angeordnet ist, eine sich verjüngende Außenoberfläche aufweist, die der sich verjüngenden Außenoberfläche der Basis (2) entspricht.

## Revendications

1. Four à gaz, comprenant une base (2), **caractérisé en ce que** le four à gaz comprend en outre un dispositif d'amplificateur de puissance audio numérique (1) assemblé dans la base (2), dans lequel le dispositif d'amplificateur de puissance audio numérique (1) comprend : un boîtier (3) de composants électriques, un couvercle arrière (4) pour une fixation sur le boîtier (3) de composants électriques afin de former un espace d'écho fermé, une plaquette de circuit imprimé pour un amplificateur de puissance (5) assemblé à l'intérieur du boîtier (3) de composants électriques, une résistance audio (6) réglable exposée partiellement à l'extérieur du boîtier (3) de composants électriques, un indicateur lumineux DEL (9) assemblé au-dessous de la résistance audio (6) réglable et exposé partiellement à l'extérieur du boîtier (3) de composants électriques, deux haut-parleurs (7) assemblés respectivement sur les côtés gauche et droit du boîtier (3) de composants électriques, une entrée audio (10) prévue à la partie inférieure du boîtier (3) de composants électriques, un connecteur femelle de transmission de données (8) prévu sur une partie extérieure du boîtier (3) de composants électriques; et dans lequel l'amplificateur de puissance audio numérique (1) est fixé sur une patte de fixation par vis, puis assemblé à la partie intérieure inférieure de la base (2) ; la résistance audio (6) réglable, l'indicateur lumineux DEL (9) et l'entrée audio (10) étant assemblés dans des trous de montage sur la base (2) et s'étendant à l'extérieur.

2. Four à gaz selon la revendication 1, dans lequel le dispositif d'amplificateur de puissance audio numérique (1) assemblé dans la base (2) ayant une surface extérieure conique présente une surface extérieure conique épousant la forme de la surface extérieure conique de la base (2).
